(19) Europäisches Patentamt
European Patent Office
Office européen des brevets

(11) Veröffentlichungsnummer: **0 180 774**
**A1**

# (12) EUROPÄISCHE PATENTANMELDUNG

(21) Anmeldenummer: **85112565.8**

(22) Anmeldetag: **04.10.85**

(51) Int. Cl.⁴: **D 06 P 3/76**

(30) Priorität: **18.10.84 DE 3438101**

(43) Veröffentlichungstag der Anmeldung:
**14.05.86 Patentblatt 86/20**

(84) Benannte Vertragsstaaten:
**AT BE CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Hähnke, Manfred, Dr.**
**Behringstrasse 13**
**D-6233 Kelkheim (Taunus)(DE)**

(72) Erfinder: **Heinrich, Martin**
**Rauenthaler Weg 22**
**D-6000 Frankfurt am Main 71(DE)**

(72) Erfinder: **Mauelshagen, Wilhelm**
**Tal-Strasse 7**
**D-6361 Niddatal 1(DE)**

## (54) Verfahren zum Färben von porösen Polyacrylnitrilfasern (PAC).

(57) Auf den handelsüblichen porösen PAC-Fasern, welche speziell im Sektor Sport- und Freizeitartikel eingesetzt werden, kann mit herkömmlichen mono-kationischen Farbstoffen kein voll befriedigendes Naßechtheitsniveau erzielt werden. Dies ist besonders deshalb ein Handicap, weil diese Artikel aus Hygienegründen einer hohen Wasch- und Schweißbeanspruchung ausgesetzt sind. Erfindungsgemäß hat sich nunmehr herausgestellt, daß sich durch den Einsatz von polykationischen Farbstoffen zum Ausziehfärben von porösen PAC-Fasern eine beachtliche Verbesserung der Naßechtheitseigenschaften erzielen läßt.

EP 0 180 774 A1

Verfahren zum Färben von porösen Polyacrylnitrilfasern (PAC)

Die vorliegende Erfindung betrifft ein Verfahren zum Färben von porösem Fasergut aus sauer-modifizierten Polymeren oder Mischpolymeren des Acrylnitrils, oder aus Mischungen solcher PAC-Fasertypen mit anderen Fasern, nach der Ausziehfärbetechnik mit kationischen Farbstoffen aus wäßrigem Färbebad bei Temperaturen von 95°C bis 106°C.

Das Färben von PAC-Fasern mit kationischen Farbstoffen ist hinlänglich bekannt und bedarf an sich keiner weiteren Erläuterung. Es sind neuerdings aber auch PAC-Fasern auf den Markt gekommen, die eine poröse Struktur besitzen (vgl. U. Mayer, R. M. Rohner und H. Zollinger in Melliand Textilberichte 1/1984, S. 47 - 51). Sie wurden entwickelt, um den Tragekomfort der Bekleidung zu verbessern. Dabei spielt neben dem Wärmerückhaltevermögen auch die Feuchtedurchlässigkeit eine Rolle. Die für Synthetics bisher unbekannte Fasereigenschaft, Wasser in beachtlichen Mengen aufnehmen und speichern zu können, wird bei diesen speziellen PAC-Fasern durch die erwähnte poröse Faserstruktur erzielt. Solche Fasern können 30 - 40% ihres Gewichtes an Wasser adsorbieren. Dies entspricht ungefähr dem Wasseraufnahmevermögen der Baumwolle und Wolle.

Auf den handelsüblichen porösen PAC-Fasern, welche speziell im Sektor Sport- und Freizeitartikel eingesetzt werden, können allerdings mit den herkömmlichen kationischen Farbstoffen keine voll befriedigenden Naßechtheitseigenschaften erzielt werden. Das ist besonders deshalb ein Handicap, weil diese Artikel aus Hygienegründen einer hohen Wasch- und Schweißbeanspruchung ausgesetzt sind. Wegen der gefundenen Unzulänglichkeiten im Hinblick auf die erreichbaren Naßechtheiten (saure und alkalische Schweißechtheit, Waschechtheit, Wasserechtheit usw.), müssen Färbungen dieser Art ab einer Fasersättigung von ca. 50% (entsprechend

einer niedrigen bis mittleren Farbtiefe) einer reduktiven Nachbehandlung unterzogen werden und machen deshalb im Vergleich zu normalen PAC-Fasern einen zusätzlichen Arbeitsgang beim Färbeprozeß erforderlich.

Als weiterhin nachteilig kommt hinzu, daß man im Falle von Färbungen der genannten porösen PAC-Fasern auf der zuvor erwähnten Grundlage auch über die benötigte reduktive Nachbehandlung nur ein Naßechtheitsniveau erzielt, welches dem einer entsprechenden Färbung auf nicht porösen (herkömmlichen) PAC-Fasern, bei der bekanntlich niemals eine reduktive Nachbehandlung in Betracht gezogen wird, weit unterlegen ist.

Bekannt ist beim Färben von PAC-Fasern des porösen Typs die Verwendung von kationischen Farbstoffen, welche nur eine einzige quartäre Gruppe oder nur eine einzige aliphatisch gebundene primäre, sekundäre oder tertiäre Amino-, Guanidino- oder Hydrazinogruppe enthalten.

Zweck und Aufgabe der vorliegenden Erfindung ist es nunmehr, die aufgezeigten Probleme auszuschalten und die geschilderten Mängel zu beseitigen.

Diese Aufgabe wird erfindungsgemäß dadurch gelöst, daß man für die Ausziehfärbung der porösen Acrylfaser solche kationischen Farbstoffe einsetzt, welche in ihrem Molekül mehr als eine sich gegenüber den sauren Gruppen der Fasersubstanz basisch (salzbildend) verhaltende Gruppe aufweisen.

Die erfindungsgemäße Verwendung dieser ausgewählten Farbstoffe für das Färben der erwähnten porösen PAC-Fasern kann sowohl als Einzelfarbstoff wie auch in Form von Kombinationen erfolgen.

Die eingesetzten poly-kationischen Farbstoffe zeichnen sich

durch eine starke Fixierung im Polymerisat aus, so daß die Nachteile der verschlechterten Naßechtheiten, wie sie mit herkömmlichen mono-kationischen Farbstoffen in Erscheinung treten, nicht mehr vorkommen und auf eine reduktive Nachbehandlung der nach der Erfindung erzeugten Färbungen völlig verzichtet werden kann.

Die verfahrensgemäß zu verwendenden poly-kationischen Farbstoffe sind in der Literatur bekannt und beispielsweise aus der veröffentlichten Europäischen Patentanmeldung 0 044 059 zu entnehmen.

Die genannten Farbstoffe können in Pulverform oder in Flüssigform, z. B. als sauer oder neutral eingestellte wäßrige Lösung zum Einsatz gelangen.

Ganz besonders geeignet für die erfindungsgemäße Anwendung sind bis- oder tris-kationische Farbstoffe, welche den Gruppen der Cyclammonium-Azo-Farbstoffe, der Azamethinfarbstoffe, Diazamethin-Farbstoffe, Naphtholactam-Farbstoffe, Methin-Farbstoffe oder Azo-Farbstoffe mit über aliphatische Brückenglieder angebundenen primären, sekundären oder tertiären Aminogruppen, oder mit quaternären Ammoniumgruppen, insbesondere Trialkylammonium-Gruppen, angehören. Für die Durchführung des beanspruchten Verfahrens werden außer pH-regulierenden Verbindungen weitere Chemikalien im allgemeinen nicht benötigt, es können aber für besondere Zwecke z.B. handelsübliche Egalisierhilfsmittel mitverwendet werden.

Neben den Polymeren des Acrylnitrils kommen für den Einsatz nach dem beanspruchten Verfahren als zu färbende Substrate Mischpolymerisate des Acrylnitrils mit anderen Vinylverbindungen wie z.B. Vinylidencyanid, Vinylchlorid, Vinylfluorid, Vinylacetat, Vinylpropionat, Vinylpyridin, Vinylimidazol, Vinylpyrrolidon, Vinyläthanol, Acryl- oder Methacrylsäure, Acryl- oder Methacrylsäureester, Acryl- oder Methacrylsäureamide in Betracht, wobei diese Mischpolymerisate mindestens 50 Gew.-%, vorzugsweise mindestens 85 Gew.-% Acrylnitril-Einheiten aufweisen. Die verwendeten Homopolymerisate von Acrylnitril und dessen Mischpolymerisate sind sauer modifiziert; sie enthalten mindestens eine saure Funktion, wie z.B. Sulfo- oder Sulfatogruppen, welche mittels eines Katalysators jeweils in das Ende der Polymerisatketten eingeführt, oder als saure Gruppen enthaltende Comonomere, wie z.B. Acrylsäure, Itaconsäure, Vinylsulfonsäure, Styrolsulfonsäure, Allylsulfonsäure, Methallylsulfonsäure, Vinyloxyarensulfonsäure, Allyloxyarensulfonsäure, Methallyloxyarensulfonsäure, Acryloxyalkoxyarensulfonsäure sowie deren Alkalisalze, einpolymerisiert werden.

Es sind erfindungsgemäß also alle Acrylnitrilpolymerisate geeignet, welche zur Bindung der verwendeten basischen Farbstoffe befähigende saure Gruppen enthalten. Solche sauren Gruppen sind in dem Spinngut in Mengen zwischen 10 und 150 Milliäquivalent pro kg Polymerisat, vorzugsweise zwischen 20 und 80 Milliäquivalent pro kg Polymerisat vorhanden.

Nach der vorliegenden Erfindung verbindet sich im Verlauf der Färbung je ein Äquivalent der sauren Gruppen in der Fasersubstanz mit einer entsprechenden Menge von sich gegenüber dieser Gruppe basisch verhaltenden Gruppen des Farbstoffes unter Ausbildung einer salzartigen Bindung.

Die porösen PAC-Fasern können verfahrensgemäß auch in Mischung mit anderen Fasern, z. B. konventionellen PAC-Fasern, Wolle, Baumwolle für die Färbung eingesetzt werden.

Die nachstehenden Beispiele dienen zur Erläuterung der Erfindung. Die darin angegebenen Teile- und Prozentangaben sind Gewichtsteile und Gewichtsprozente, sofern nichts anderes vermerkt ist. Volumenteile verhalten sich zu Gewichtsteilen wie Liter zu Kilogramm.

Beispiel 1

10 g eines handelsüblichen Spinnguts mit poröser Struktur, das aus einem an den Polymerisatketten endständig sauermodifiziertem PAC-Homopolymerisat besteht, wird in Strangform unter guter Flottenbewegung in 400 ml einer 80°C warmen, mittels Essigsäure und Natriumacetat auf pH 4,5 gestellten wäßrigen Färbeflotte gebracht, welche 0,1 g eines bis-quartären Farbstoffes der folgenden Formel enhält:

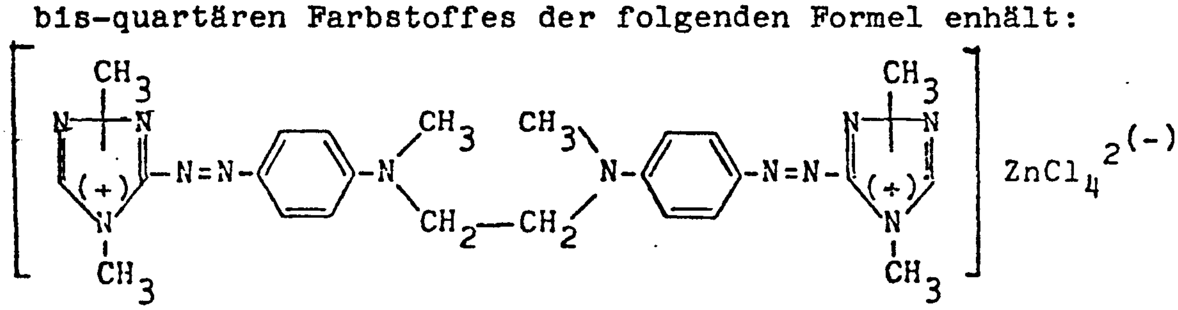

Das Färbebad wird jetzt innerhalb von 40 Minuten auf 98°C erwärmt und das Textilgut wird nach Erreichen der Endtemperatur noch 1 Stunde bei 98°C gefärbt. Nach Ablauf der angegebenen Färbezeit beobachtet man eine praktisch vollständige Baderschöpfung. Das Färbebad wird daraufhin langsam auf 75°C abgekühlt, sodann wird das Färbegut daraus entnommen und nach kurzem Spülen in kaltem Wasser abschließend bei 80°C getrocknet.

Man erhält eine blaustichig-rote Färbung mit ausgezeichneten Echtheiten, besonders guten Naßechtheiten und sehr guter Lichtechtheit. Eine reduktive Nachbehandlung der gefärbten Ware erübrigt sich.

Beispiele 2 bis 8

Ersetzt man nunmehr die im Beispiel 1 verwendete handelsübliche PAC-Faser vom porösen Typ durch andere poröse PAC-Fasern aus Mischpolymeren mit der folgenden Zusammensetzung, so erhält man auf dem Textilgut entsprechend der Färbevorschrift des Beispiels 1 ebenfalls eine sehr gute Farbstoffixierung. Die Naßechtheitseigenschaften dieser Färbungen entsprechen denen des Beispiels 1:

| Beispiel | Polymer aus |
|---|---|
| 2 | 94 % Acrylnitril<br>4 % Acrylsäuremethylester<br>2 % Na-Methallylsulfonat |
| 3 | 95 % Acrylnitril<br>4,5 % Acrylsäuremethylester<br>0,5 % Acrylsäure |
| 4 | 85 % Acrylnitril<br>13 % Vinylacetat<br>2 % Na-Allylsulfonat |
| 5 | 85 % Acrylnitril<br>14,5 % Vinylacetat<br>0,5 % Na-Vinylsulfonat |
| 6 | 59 % Acrylnitril<br>40 % Vinylidenchlorid<br>1 % Na-Methallylsulfonat |
| 7 | 94 % Acrylnitril<br>5 % Acrylsäuremethylester<br>1 % Styrol-4-sulfonsäure-Na |
| 8 | 94 % Acrylnitril<br>4 % Vinylacetat<br>1 % Na-Methallylsulfonat<br>1 % Itaconsäure-Na |

Beispiel 9

Verwendet man anstelle der gemäß Beispiel 1 erzeugten Fäden hier solche Fäden, denen beim Spinnprozeß 0,2 Teile eines handelsüblichen Titandioxyd-Mattierungsmittels (bezogen auf das Polymer) zugesetzt worden sind, so erhält man beim Färben des Spinnguts entsprechend der Arbeitsweise des Beispiels 1 ebenfalls eine gute Farbstoffixierung und sehr gute Naßechtheiten.

Beispiel 10

Verwendet man zum Färben des Spinnguts anstelle des im Beispiel 1 eingesetzten Farbstoffes hier einen konventionellen mono-quartären Farbstoff der Formel

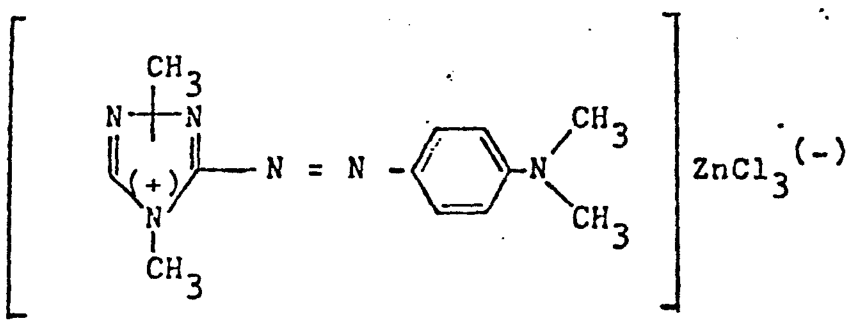

in gleicher Menge, so erhält man damit entsprechend der Arbeitsweise des Beispiels 1 eine Färbung mit unzureichenden Naßechtheiten, fast gleichgültig, ob reduktiv (unter Einwirkung von Ammoniak und Na-Dithionit in wäßrigem Bad bei ca. 50°C) nachbehandelt wird oder nicht.

Beispiele 11 und 12

Setzt man zum Färben des Spinnguts mit dem bis-quartären Farbstoff von Beispiel 1 anstelle der dort verwendeten Farbstoffmenge von 0,1 g hier Mengen von 0,2 g bzw. 0,02 g des identischen Farbstoffes ein, so erhält man nach der Arbeitsweise gemäß Beispiel 1 bei der im vorliegenden

Färbetest entsprechend erhöhten oder verringerten Farbtiefe eine gleichermaßen gute Farbstoffixierung. Die Naßechtheiten der Färbungen sind ebenfalls sehr gut. Eine reduktive Nachbehandlung erübrigt sich auch in diesen beiden Fällen.

Beispiele 13 und 14

Führt man die Färbung des Beispiels 1 statt bei pH 4,5 hier bei pH-Werten von 3 bis 6, aber sonst denselben Arbeitsbedingungen durch, so erhält man das gleiche Färbeergebnis wie in Beispiel 1.

Beispiel 15

Verwendet man bei der Arbeitsweise des Beispiels 1 zum Färben des Spinngutes hier eine Mischung von Farbstoffen in den unten angegebenen Mengen:

0,05 g Farbstoff der Formel

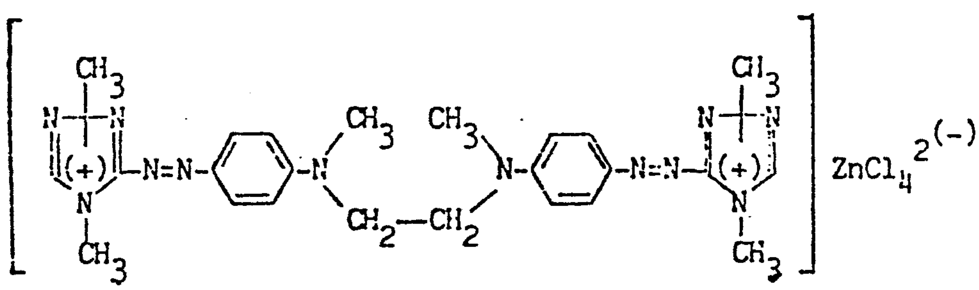

0,08 g Farbstoff der Formel

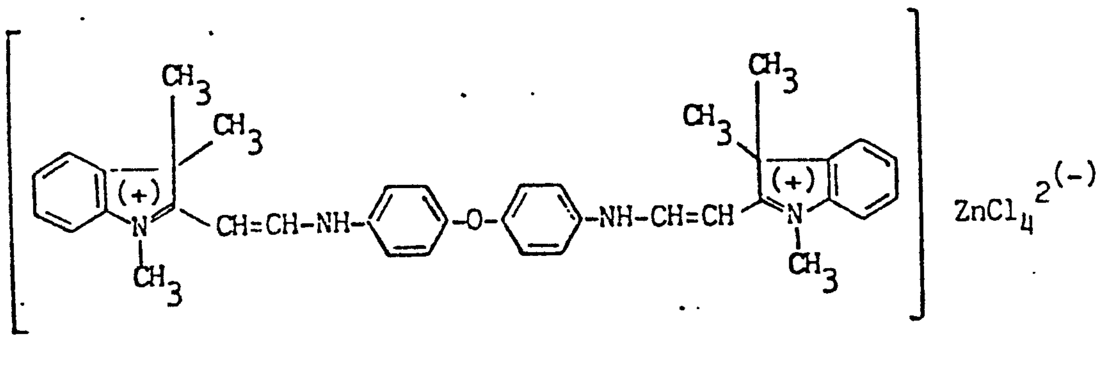

0,03 g Farbstoff der Formel

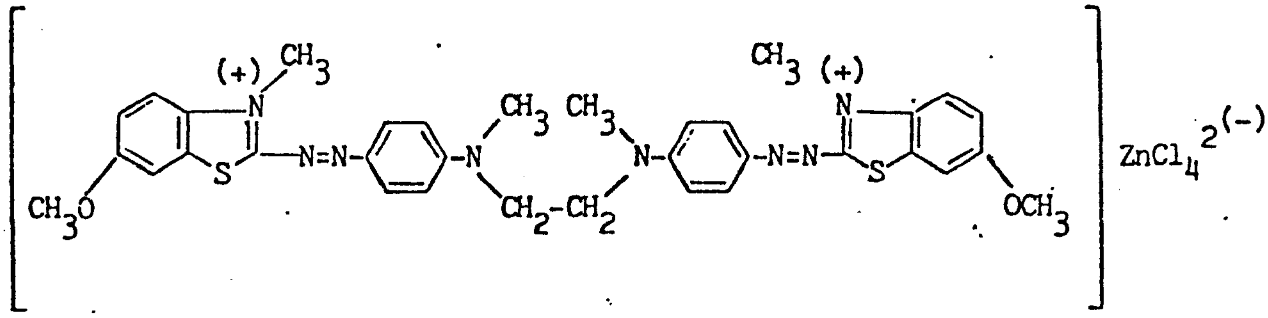

so erhält man eine tiefe braune Färbung mit sehr hohen Echtheiten, besonders mit sehr hoher Wasserechtheit, Waschechtheit und alkalischer Schweißechtheit.

Tabellenbeispiele:

Werden zum Färben der porösen PAC-Fasern anstelle des im Beispiel 1 verwendeten Farbstoffes hier andere Farbstoffe der folgenden Formeln eingesetzt, so erhält man ebenfalls eine sehr gute Farbstoffixierung, d.h. eine gute Baderschöpfung und ein sehr hohes Naßechtheitsniveau. Eine reduktive Nachbehandlung erübrigt sich jeweils:

| Beispiel | Formel | Nuance |
|---|---|---|
| 16 | 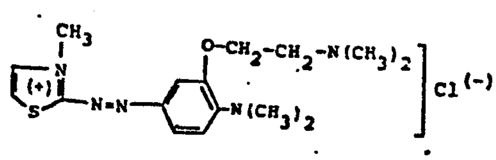 | rotstichig blau |
| 17 | 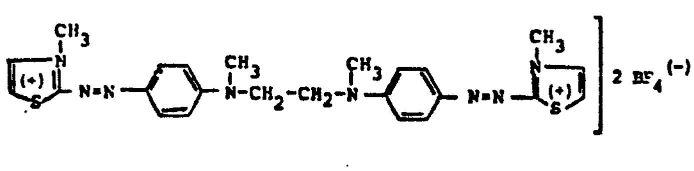 | blaustichig violett |

| Beispiel | Formel | Nuance |
| --- | --- | --- |
| 18 | 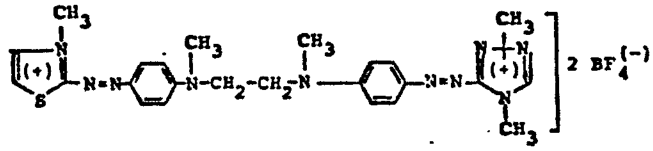 | rotstichig violett |
| 19 | 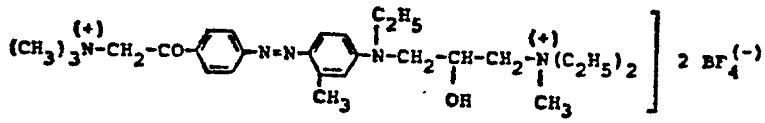 | rot |
| 20 | 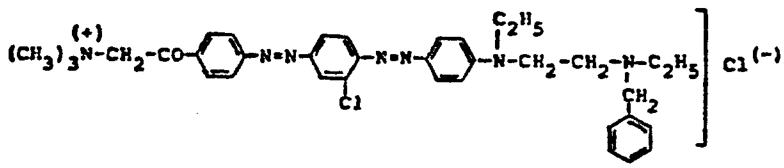 | orange |
| 21 | 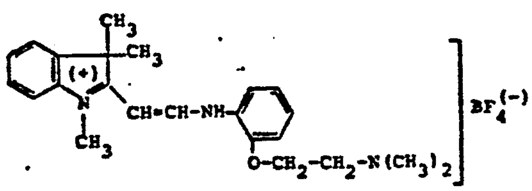 | gelb |
| 22 | 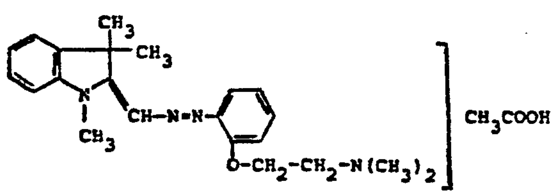 | rotstichig gelb |
| 23 | 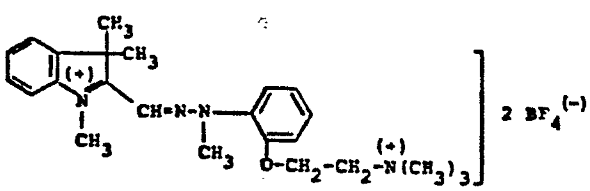 | rotstichig gelb |
| 24 | 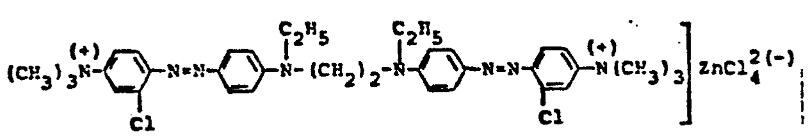 | orange |
| 25 | 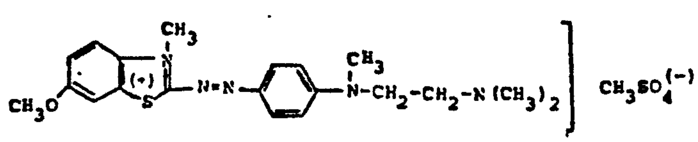 | blau |

| Beispiel | Formel | | Nuance |
|---|---|---|---|
| 26 | 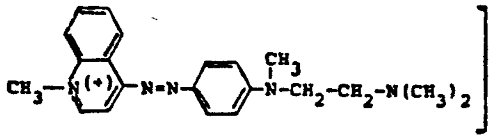 | $CH_3COO^{(-)}$ | blau |
| 27 | 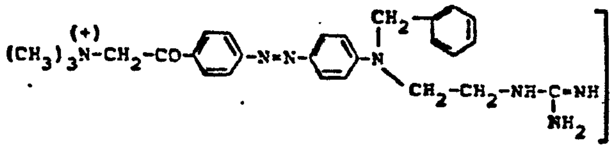 | $Cl^{(-)}$ | orange |
| 28 | 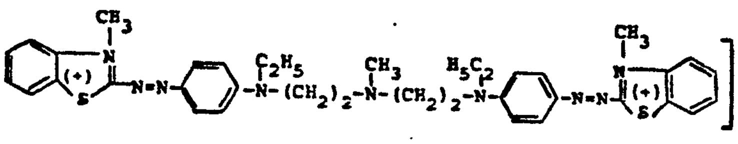 | $2\ BF_4^{(-)}$ | violett |
| 29 | 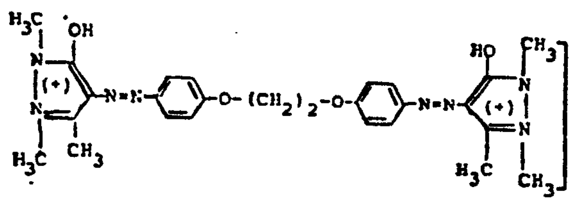 | $2\ BF_4^{(-}$ | gelb |
| 30 | 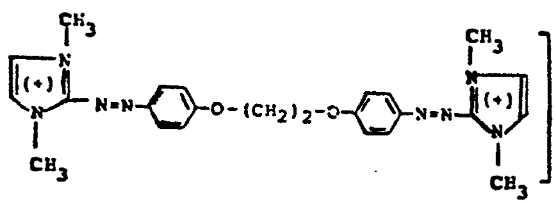 | $2\ BF_4^{(-)}$ | gelb |
| 31 | 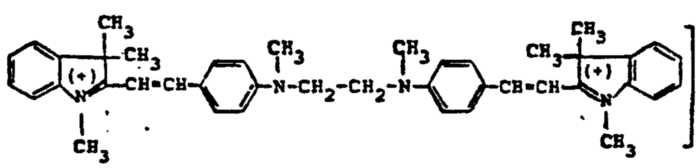 | $2\ CH_3COO^{(-)}$ | rot |
| 32 | 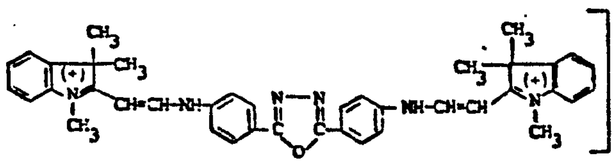 | $2\ BF_4^{(-)}$ | gelb |

| Beispiel | Formel | Nuance |
| --- | --- | --- |
| 33 | 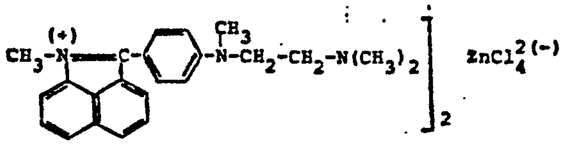 | blau |
| 34 | 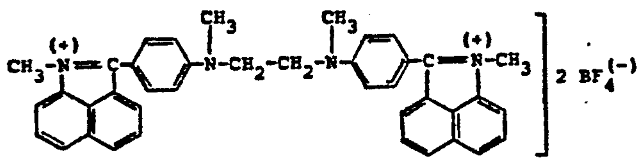 | blau |
| 35 | 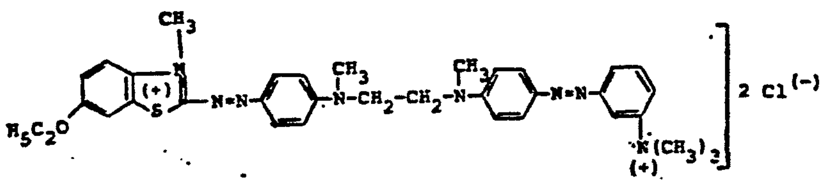 | grün |
| 36 | 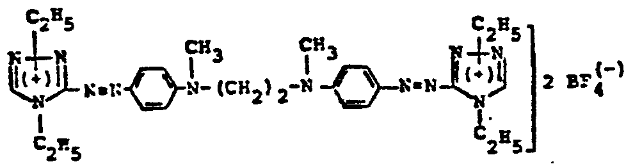 | bordo |

Patentansprüche:

1. Verfahren zum Färben von porösem Fasergut aus sauermodifizierten Polymeren oder Mischpolymeren des Acrylnitrils, oder aus Mischungen solcher PAC-Fasertypen mit anderen Fasern, nach der Ausziehfärbetechnik mit kationischen Farbstoffen aus wäßrigem Färbebad bei Temperaturen von 95° bis 106°C, dadurch gekennzeichnet, daß man solche kationischen Farbstoffe einsetzt, welche in ihrem Molekül mehr als eine sich gegenüber den sauren Gruppen des faserbildenden Polymers basisch (salzbildend) verhaltende Gruppe aufweisen.

2. Verfahren gemäß Anspruch 1, dadurch gekennzeichnet, daß die eingesetzten kationischen Farbstoffe 2 oder 3 sich gegenüber den sauren Gruppen des faserbildenden Polymers basisch (salzbildend) verhaltende Gruppen aufweisen.

3. Verfahren gemäß Anspruch 1 oder 2, dadurch gekennzeichnet, daß die eingesetzten kationischen Farbstoffe der Gruppe der Cyclammonium-Azo-Farbstoffe angehören.

4. Verfahren gemäß Anspruch 1 oder 2, dadurch gekennzeichnet, daß die eingesetzten kationischen Farbstoffe der Gruppe der Azo-Farbstoffe mit über aliphatische Brückenglieder angebundenen primären, sekundären oder tertiären Aminogruppen, oder mit quaternären Ammoniumgruppen angehören.

5. Verfahren gemäß Anspruch 4, dadurch gekennzeichnet, daß die eingesetzten kationischen Farbstoffe der Gruppe der quaternären Azo-Farbstoffe mit Trialkylammoniumgruppen angehören.

6. Verfahren gemäß Anspruch 1 oder 2, dadurch gekennzeichnet, daß die eingesetzten kationischen Farbstoffe

der Gruppe der Azamethin- oder Diazamethin-Farbstoffe angehören.

7. Verfahren gemäß Anspruch 1 oder 2, dadurch gekennzeichnet, daß die eingesetzten kationischen Farbstoffe der Gruppe der Naphtholactam-Farbstoffe angehören.

8. Verfahren gemäß Anspruch 1 oder 2, dadurch gekennzeichnet, daß die eingesetzten kationischen Farbstoffe der Gruppe der Methinfarbstoffe angehören.

0180774

Europäisches Patentamt

# EUROPÄISCHER RECHERCHENBERICHT

Nummer der Anmeldung

EP 85 11 2565

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | TEXTILVEREDLUNG, Band 19, Nr. 2, Februar 1984, Seiten 39-42, Weinfelden, CH; U. MEYER et al.: "Vergleich der Kombinierbarkeit kationischer Farbstoffe auf regulären und porösen Acrylfasern" * Seite 41, Tabelle 2 * | 1 | D 06 P 3/76 |
| D,A | EP-A-0 044 059 (HOECHST) * Patentansprüche 1-14 * | 1-8 | |
| A | GB-A-2 028 856 (ICI) * Seite 7, Patentanspruch 1; Seite 4, Zeilen 11-15; Beispiele 1-12 * | 1-5 | |
| A | TEXTILVEREDLUNG, Band 16, Nr. 3, 1981, Seiten 89-95, Weinfelden, CH; G. AVIV et al.: "Diffusion kationischer Farbstoffe in poröse Polyacrylnitril-Fasern" * Seite 90, linke Spalte, Tabelle 2 * | 1 | RECHERCHIERTE SACHGEBIETE (Int. Cl.4)<br>D 06 P |

---                    -/-

Der vorliegende Recherchenbericht wurde für alle Patentansprüche erstellt

| Recherchenort | Abschlußdatum der Recherche | Prüfer |
|---|---|---|
| DEN HAAG | 23-01-1986 | DEKEIREL M.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

0180774

Europäisches Patentamt

# EUROPÄISCHER RECHERCHENBERICHT

Nummer der Anmeldung

EP 85 11 2565

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | MELLIAND TEXTILBERICHTE, Band 65, Nr. 1, Januar 1984, Seiten 47-51, Ludwigsburg, DE; U. MEYER et al.: "Untersuchungen über das färberische Verhalten von porösen Acrylfasern" * Seite 47, 'Zusammenfassung'; Seite 50, linke Spalte, letzter Absatz - Seite 51, linke Spalte, Absatz 3 * | 1 | |
| | ----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 23-01-1986 | DEKEIREL M.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument